# EUROPEAN PATENT SPECIFICATION

(11) **EP 3 191 723 B1**
(45) Date of publication and mention of the grant of the patent: **12.02.2020**
(21) Application number: 15778996.7
(22) Date of filing: 09.09.2015
(51) Int. Cl.: F16B 7/20, F16B 37/08

(54) **STIFFENING ASSEMBLY**
VERSTEIFUNGSANORDNUNG
ENSEMBLE DE RENFORCEMENT

(30) Priority: 10.09.2014 GB 201415973; 19.01.2015 GB 201500866
(43) Date of publication of application: 19.07.2017
(73) Proprietor: Gripple Limited, Sheffield S4 7UQ (GB)
(72) Inventor: DAVIS, Simon, Sheffield South Yorkshire S17 3NJ (GB); BAKER, Martin, Rotherham S66 1UH South Yorkshire (GB)
(86) International application number: PCT/GB2015/000264
(87) International publication number: WO 2016/038325

(56) References cited:
- EP-A1- 1 445 499
- EP-A2- 0 167 499
- US-B1- 8 047 478

## Description

This invention relates to stiffening assemblies. More particularly, but not exclusively, this invention relates to rod stiffening assemblies. Embodiments of the invention relate to stiffening assemblies for use in stiffening elongate articles, such as rods, during seismic events.

In regions prone to earthquakes, attempts are made to construct buildings so that they will withstand them. In many such buildings, lighting equipment and other apparatus can be suspended from the roof by the use of rods. The rods are braced on opposite sides to prevent movement during an earthquake. However, the installation of such bracing is time consuming and expensive.

US 8047478 B1 discloses a modular post system with holes on multiple axial planes.

The invention is defined by the appended claims. According to one aspect of this invention, there is provided a stiffening assembly for stiffening an article, the stiffening assembly comprising a plurality of main modules arrangeable on the article, each main module comprising:
a body defining a longitudinal central axis, a receiving formation within the body, and
a longitudinally extending elongate outer opening to allow access of the article to the receiving formation, wherein the body has opposite ends and the central axis extends between said opposite ends;
wherein the receiving formation defines an internal space for receiving the portion of the article therethrough, and wherein the receiving formation has a longitudinal subsidiary central axis, characterised in that the longitudinal subsidiary central axis of the receiving formation is offset from the main central axis of the body.

Each of the main modules may define a plane extending longitudinally through the outer opening and through said axis, wherein the planes defined by the modules are each in a substantially identical position relative to the respective module, and wherein the planes of adjacent modules are disposed relative to each other at an angle of between 1° and 24°.

In a stiffening assembly, the planes of adjacent modules may be disposed relative to each other at an angle of between 1° and 12°. The planes of adjacent modules may be disposed relative to each other at an angle of between 5° and 10°. The planes of adjacent modules may be disposed relative to each other at an angle of between 8° and 9°. The planes of adjacent modules may be disposed relative to each other at an angle of substantially 8.5°.

In a stiffening assembly, the planes of adjacent modules may be disposed relative to each other at an angle of between 2° and 23°. The planes of adjacent modules may be disposed relative to each other at an angle of between 10° and 20°. The planes of adjacent modules may be disposed relative to each other at an angle of between 16° and 18°. The planes of adjacent modules may be disposed relative to each other at an angle of substantially 17°.

In one embodiment, the stiffening assembly may further include a securing arrangement for securing the main modules to the article.

The stiffening assembly may be suitable for use with an elongate article, for example a rod. The stiffening assembly may be suitable for use during seismic events. The stiffening assembly may comprise a seismic protection stiffening assembly. The stiffening assembly may be elongate.

The stiffening assembly may comprise a fastening arrangement for coupling the main modules to one another. The fastening arrangement may comprise first and second fastening formations. The first fastening formations may comprise male fastening formations. The second fastening formations may comprise female fastening formations to receive the male fastening formations.

The first and second fastening formations may be threaded fastening formations. The first fastening formations may comprises externally threaded fastening formations. The second fastening formations may comprise internally threaded fastening formations.

The receiving formation may be provided within the body. The body may have an internal region. The internal region may define the internal space for receiving the article therethrough, the internal space may be defined by the body. The receiving formation may have opposite open ends to allow the article to extend through the internal space.

The receiving formation may be elongate. The internal space may be elongate. The receiving formation may extend through the body. The internal space may extend centrally through the body. The internal space may extend substantially along the central axis of the body. The receiving formation may extend substantially centrally through the body. The receiving formation may be tubular.

In one embodiment, the receiving formation may have a substantially circular end profile. In a stiffening assembly, the receiving formation may have a substantially U shaped profile.

In one embodiment, the internal space defined by said receiving formation may have a substantially circular end profile. In a stiffening assembly, the internal space defined by said receiving formation may have a substantially U shaped end profile. The internal space may be elongate.

The outer opening may allow access to the internal space.

The outer opening may extend the whole length of the body. The outer opening may be a slot.

In one embodiment, the receiving formation may define an inner opening to allow said portion of the article to be received within the internal space. The inner opening may be elongate and may extend the whole length of the receiving formation. The inner opening may be a further slot in the receiving formation.

The body may define a guide passage to guide the article to the inner opening defined by the receiving formation. The guide passage may be configured to guide the article between the inner opening and the outer opening. The body may comprise opposed walls extending between the inner opening and the outer opening. The opposed walls may define the guide passage.

In one embodiment, the first and second fastening formations may be provided on a respective one of the opposite ends.

The first fastening formation on one of the main modules may co-operate engagingly with the second fastening formation on an adjacent one of the main modules to couple the main modules to each other. The first fastening formation on one of the main modules may be rotatably moveable relative to the second fastening formation on the adjacent main module. Thus, co-operative engagement of the first fastening formation on one of the main modules with the second fastening formation on the adjacent main module is effected by rotation of the first and second fastening formations relative to each other. The aforesaid rotation may be effected by rotating the body of the adjacent main modules relative to each other.

Said rotation can be effected about the longitudinal main central axis of the body of each main module.

In one embodiment, the longitudinal subsidiary central axis of the receiving formation may extend substantially parallel to the main central axis of the body. The offset of the longitudinal subsidiary central axis of the receiving formation from the main central axis of the body provides the advantage in one embodiment described herein that, when adjacent main modules are coupled to each other by relative rotation, the respective receiving formations are moved to positions in which they are unaligned relative to each other, thereby securing the main modules to the article. Thus, in one embodiment described herein, the securing arrangement may comprise the fastening arrangement. The securing arrangement may further include receiving formation of each main module.

The first and second fastening formations on each end of the body may comprise corresponding first and second threaded portions to allow adjacent main modules to be coupled to one another by screwing them together. The threaded portions may be provided at respective opposite ends of the body. The first threaded portion may be externally threaded. The second threaded portion may be internally threaded.

In a stiffening assembly, the fastening arrangement may comprise a coupling module to couple the main modules to one another. The fastening arrangement may comprise a plurality of coupling modules.

In a stiffening assembly, the first and second fastening formations may be provided respectively on the main and coupling modules.

The main module may comprise at least one of the first fastening formations. Desirably, the main module may have two of the first fastening formations. The body may have a first fastening formation at each of the opposite ends thereof. The first fastening formations may be coaxially aligned with each other.

Each coupling module may have a second fastening formation. Each of the coupling modules may have two fastening formations. Both fastening formations of each coupling module may be second fastening formations. The second fastening formations may be coaxially aligned with each other.

The body of each main module may comprise two male first fastening formations. The coupling module may comprise two female second fastening formations.

The stiffening assembly may comprise a plurality of main modules, wherein the body of each main module has two first fastening formations. The stiffening assembly may further include a respective coupling module to couple two of the main modules in an adjacent aligned relationship, the coupling formation having two second fastening formations.

Each coupling module may comprise a holding portion provided between the fastening formations of the coupling module. The holding portion may define an aperture having a side opening.

The side opening may extend the length of the coupling module to allow access for the article to the aperture. The aperture may be configured to receive the article therethrough. The aperture may have a substantially U shaped end profile.

The receiving formation may comprise inner projections extending into the internal space. The projections may be configured to engage the article when the article is received in the internal space.

The projections may allow the stiffening assembly to be used with articles of differing diameters. The projections may be configured to be crushed by the article. This can be the case where the article has a larger diameter.

The holding formation may comprise inner projecting members extending into the aperture. The inner projecting members may be configured to engage the article when the article is received in the aperture.

In a stiffening assembly, the first and second fastening formations may comprise bayonet fittings. Each bayonet fitting may comprise a radially extending projecting portion on one of the main module and the coupling module. Each bayonet fittings may comprise a circumferentially extending channel on the other of the main module and the coupling module.

The first fastening formation may comprise the circumferentially extending channel. The channel may extend radially outwardly. The second fastening formation may comprise the projecting portion. The projecting portion may extend radially inwardly.

Each first fastening formation may comprise a substantially cylindrical portion. Each main module may comprise a pair of substantially cylindrical portions, wherein each substantially cylindrical portion may be provided at a respective opposite end of the body.

The cylindrical portion may extend axially from the body. Each first fastening formation may further include a first securing arrangement. The first securing arrangement may comprise a first part of the bayonet fitting.

The first securing arrangement may comprise the channel. The channel may extend circumferentially around the cylindrical portion. The first securing arrangement may include a stop member at one end of the channel. The stop member may be in the form of walls extending across the channel.

Each coupling module may comprise a pair of opposed second fastening formations. Each of the second fastening formations may be in the form of a female fastening formation.

Each of the second fastening formations may comprise a socket formation. Each socket formation may comprise a hollow cylindrical portion. Each socket formation may further include a radially inwardly extending second securing arrangement.

Each second securing arrangement may comprise second parts of the bayonet fitting. The second fastening formations may be axially aligned with each other.

The first and second securing arrangements may be twisted relative to each other to secure the main modules in an unaligned relationship when the main modules are coupled to one another to form the stiffening assembly. Adjacent main modules in said stiffening assembly may be twisted relative to each other by an angle of greater than 90°. Adjacent main modules in said stiffening assembly may be twisted relative to each other by an angle of between 182° and 204°. Adjacent main modules in said stiffening assembly may be twisted relative to each other by an angle of between 185° and 200°, Adjacent main modules in said stiffening assembly may be twisted relative to each other by an angle of between 196° and 198°, for example substantially 197°.

Each main module may be twisted by an angle of between 91° and 102° relative to the, or each, coupling module to which it is secured. Each main module may be twisted by an angle of between 95° and 100° relative to the, or each, coupling module to which it is secured, Each main module may be twisted by an angle of between 98° and 99° relative to the, or each, coupling module to which it is secured, for example substantially 98.5°.

Alternate main modules of the stiffening assembly may be twisted relative to each other by an angle of between 364° and 408°. Alternate main modules of the stiffening assembly may be disposed relative to each other by an angle of between 4° and 48°.

Alternate main modules of the stiffening assembly may be twisted relative to each other by an angle of between 380° and 400°. Alternate main modules of the stiffening assembly may be disposed relative to each other by an angle of between 20° and 40°.

Alternate main modules of the stiffening assembly may be twisted relative to each other by an angle of between 392° and 396°, for example substantially 394°. Alternate main modules of the stiffening assembly may be disposed relative to each other by an angle of between 32° and 36 °, for example substantially 34°.

The stop member and/or the second part may be positioned so that when a plurality the main modules are coupled to one another by means of the coupling modules, the adjacent main modules and coupling modules may be rotated relative to each other by between 91° and 102°. In a stiffening assembly, the adjacent main modules and coupling modules may be rotated relative to each other by between 91° and 98°.

The stop member and/or the second part may be positioned so that when a plurality the main modules are coupled to one another by means of the coupling modules, the adjacent main modules and coupling modules are rotated relative to each other by between 95° and 100°. In a stiffening assembly, the adjacent main modules and coupling modules may be rotated relative to each other by between 92° and 96°.

The stop member and/or the second part may be positioned so that when a plurality the main modules are coupled to one another by means of the coupling modules, the adjacent main modules and coupling modules are rotated relative to each other by between 98° and 99°, for example 98.5°. In a stiffening assembly, the adjacent main modules and coupling modules are rotated relative to each other by between 93° and 95°, for example, between 94° and 94.5°.

Adjacent main modules may be between 182° and 204° out of alignment with each other. In a stiffening assembly, the adjacent main modules may be between 182° and 196° out of alignment with each other.

Adjacent main modules may be between 190° and 200° out of alignment with each other. In a stiffening assembly, the adjacent main modules may be between 184° and 192° out of alignment with each other.

Adjacent main modules may be between 196° and 198° out of alignment with each other, for example 197°. Adjacent main modules may be between 186° and 190° out of alignment with each other, for example between 188° and 189°.

Alternate main modules may be between 4° and 48° out of alignment with each other. Alternate main modules may be between 20° and 40° out of alignment with each other. Alternate main modules may be between 32° and 36° out of alignment with each other, for example 34° out of alignment with each other.

In a stiffening assembly, alternate main modules may be between 2° and 24° out of alignment with each other. Alternate main modules may be between 10° and 20° out of alignment with each other. Alternate main modules may be between 16° and 18° out of alignment with each other, for example substantially 17° out of alignment with each other.

Reference is now made to the accompanying drawings, in which:
Figure 1 shows an embodiment of a stiffening assembly comprising a plurality of main modules;
Figure 2 shows the embodiment of the stiffening assembly with the main modules coupled to one another;
Figure 3 shows the embodiment of the stiffening assembly with an elongate article extending through the main modules;
Figure 4 shows the embodiment of the stiffening assembly secured to the elongate article;
Figure 5 is a perspective view from a first end of one of the main modules;
Figure 6 is a perspective view from a second opposite end of the main module;
Figure 7 is a view of one of the main modules from the first end;
Figure 8 is a close-up of the region marked VIII in Figure 7;
Figure 9 shows another stiffening assembly;
Figure 10 shows the stiffening assembly shown in Figure 9 with an elongate article extending therethrough;
Figure 11 shows the stiffening assembly shown in Figure 9 secured to the elongate article;
Figure 12 shows a main module, being part of the stiffening assembly shown in Figure 9;
Figure 13 shows a coupling module, being part of the stiffening assembly shown in Figure 9;
Figure 14 is a top plan view of the coupling module;
Figure 15 shows the main module and the coupling module of the stiffening assembly shown in Figure 9 aligned with each other;
Figure 16 is a top plan view showing a main module and a coupling module secured to each other; and
Figure 17 is a perspective view of another stiffening assembly.

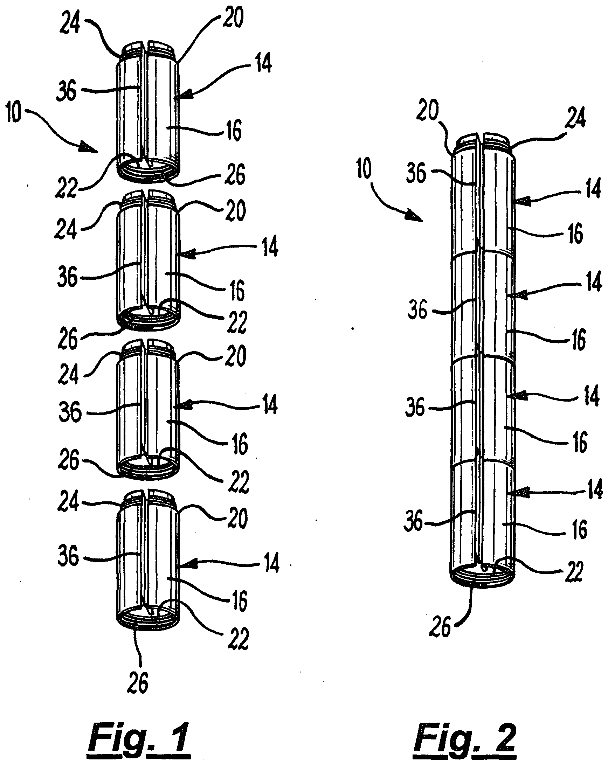

Figures 1 to 4 of the drawings show an embodiment of a stiffening assembly 10 for stiffening an elongate article in the form of a rod 12. The elongate article may be threaded and may comprise a threaded rod. The stiffening assembly 10 comprises a plurality of main modules 14 which can receive the rod 12 therethrough.

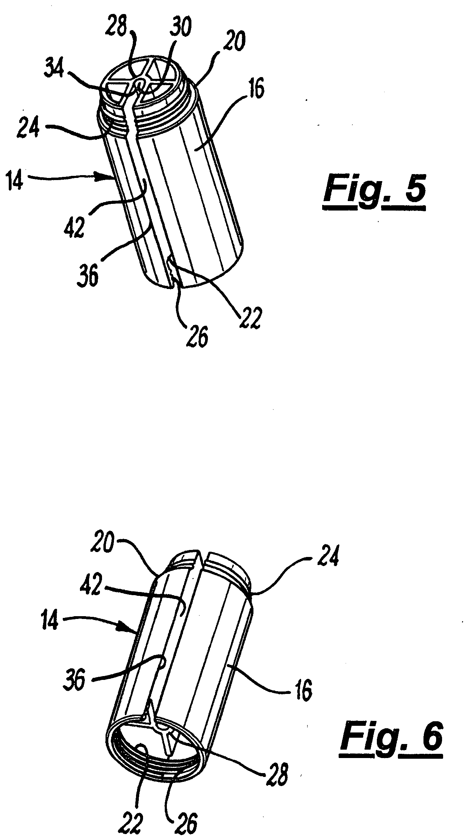

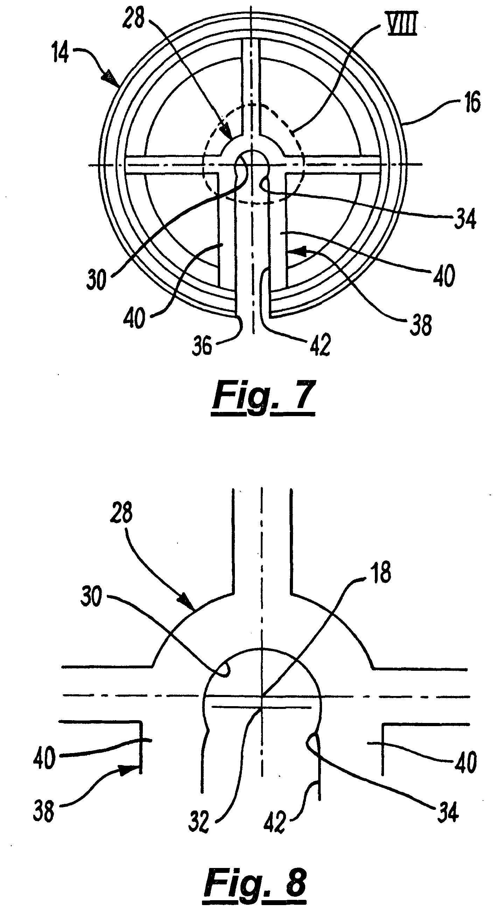

Figures 5 to 8 show an individual one of the main modules 14. Each of the main modules 14 comprises a substantially cylindrical body 16 having a longitudinal main central axis 18 (see Figures 7 and 8) extending along the longitudinal centre line of the body 16. The cylindrical body 16 also has opposite ends 20, 22 (see Figures 5 and 6). Each main module 14 also includes first and second fastening formations 24, 26 provided respectively on the opposite ends 20, 22.

The first fastening formation 24 comprises an externally threaded portion extending axially from the body 16. The second fastening formation 26 comprises an internally threaded portion extending axially from the body 16. The first fastening formation 24 on each main module 14 can be received by the second fastening formation 26 of the adjacent main module 14 to couple the adjacent main modules 14 to each other (see Figures 2 to 4).

The adjacent main modules 14 are rotated relative to each other about their central main axes 18 to screw the first fastening formations 24 into the second fastening formations 26, thereby fastening the adjacent main modules 14 to each other.

Each main module 14 comprises a receiving formation provided centrally within the body 16. The receiving formation is in the form of a substantially cylindrical tubular member 28 defining an elongate substantially cylindrical internal space 30. Referring to Figures 7 and 8, the tubular member 28 has a longitudinal subsidiary central axis 32 extending along the longitudinal centre line of the tubular member 28.

The longitudinal subsidiary central axis 32 is substantially parallel to the main central axis 18 of the body 16. The longitudinal subsidiary central axis 32 of the tubular member 28 is offset from the main central axis 18 of the body 16. As a result, the tubular member 28 is offset from the main central axis 18 of the body 16. The reason for this is explained below.

The tubular member 28 has an elongate inner opening 34 in the form of a first slot. The elongate inner opening 34 extends the whole length of the tubular member 38.

The body 16 defines an elongate outer opening 36 in the form of a second slot. The elongate outer opening 36 extends the whole length of the body 16 and is aligned with the inner opening 34 defined in the tubular member 28. The rod 12 can be received in the internal space 30 via the inner and outer openings 34, 36.

A guide formation 38 is provided between the inner opening 34 and the outer opening 36. The guide formation 38 comprises a pair of parallel walls 40 extending from the tubular member 28 to the body 16. The parallel walls 40 define a guide passage 42 therebetween.

The guide passage 42 guides the rod 12 from the elongate outer opening 36 via the inner opening 34 to the internal space 30 defined by the tubular member 28.

A plurality of straightening formations 44 in the form of substantially planar members extend from the body 16 to the tubular member 28.

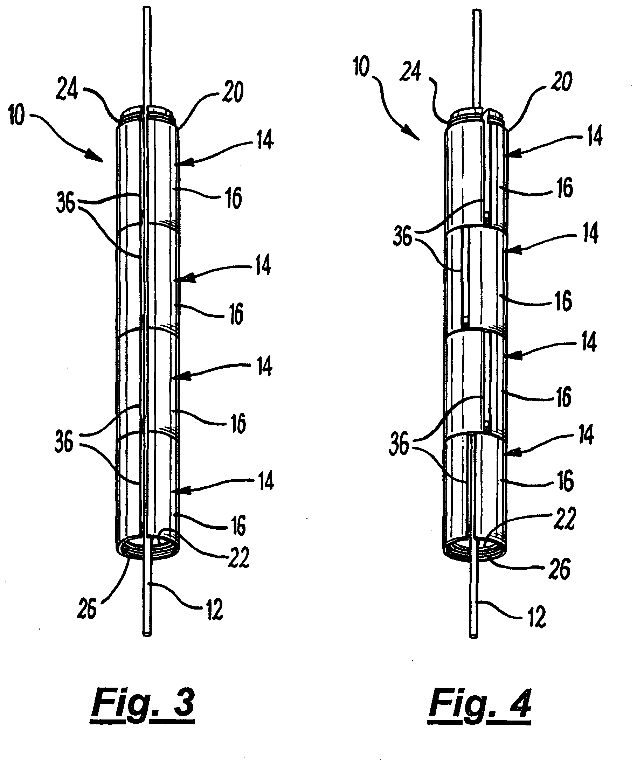

Referring to Figure 3 and 4, a plurality of the main modules 14 can be mounted on the rod 12 by passing the rod 12 into each of the main modules 14. Thus, the rod 12 passes through the elongate outer opening 36 of each main module 14 to the elongate internal space 30 via the guide passage 42 and the inner opening 34.

As shown in Figures 3 and 4, a desired number of the main modules 14, for example 4, can be provided on the rod 12, with the rod 12 extending through the tubular members 28 of all of the main modules 14.

The main modules 14 can be secured to the rod 12 by screwing the first fastening formations 24 into the second fastening formations 26 of the adjacent main modules 14. As the first and second fastening formations 24, 26 are screwed into each other, the tubular members 28 are moved to positions where the central axes 32 are not aligned with each other. This causes the tubular members 28 to be offset from one another thereby causing the tubular members 28 to engage tightly with the rod 12. As a result, the fastening formations 24, 26 and the offset tubular members 28 constitute a securing arrangement for securing the stiffening assembly 10 to the rod 12. Thus, by screwing the first and second fastening formations 24, 26 of adjacent main modules 14 into each other, the main modules 14 are secured to the rod 12.

There is thus described a stiffening assembly 10 which can be used for stiffening an elongate article in the form of a rod. The stiffening assembly 10 has the advantage that it can be used for seismic protection in areas prone to earthquakes to reduce the flexibility of the rods when earthquakes occur. In addition, the stiffening assembly 10 has the advantage that it can be used for blast protection, for example in embassies, or in military or government facilities. It also has the advantage of being suitable for use for force protection, for example in the case of hurricanes or tornadoes.

Various modifications can be made without departing from the scope of the invention.

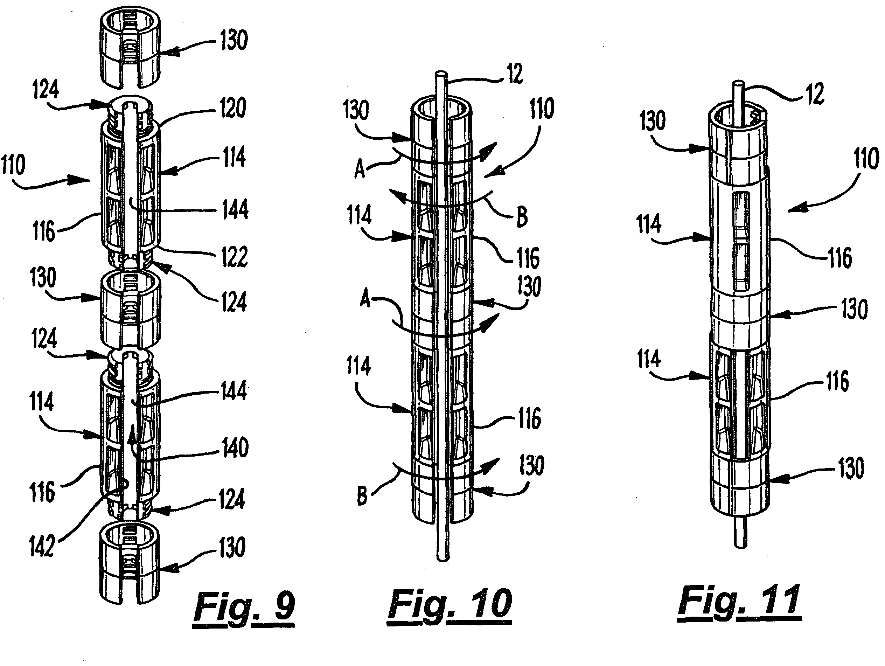

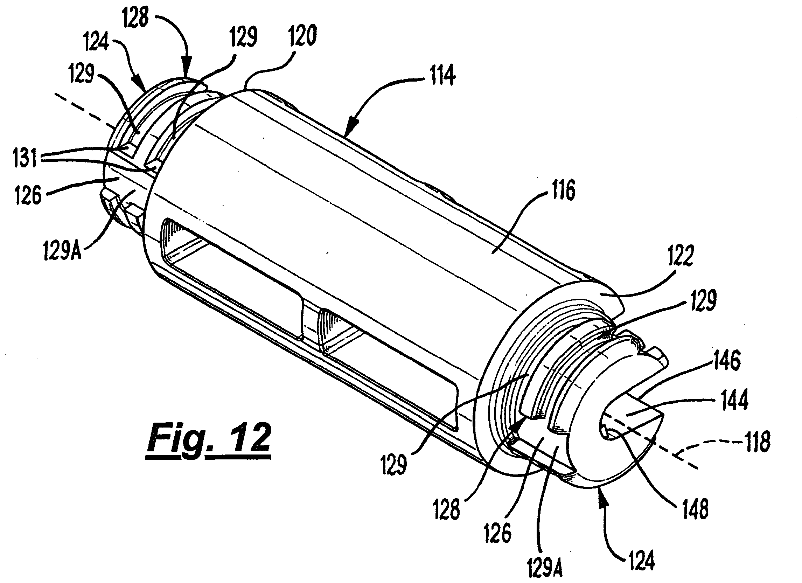

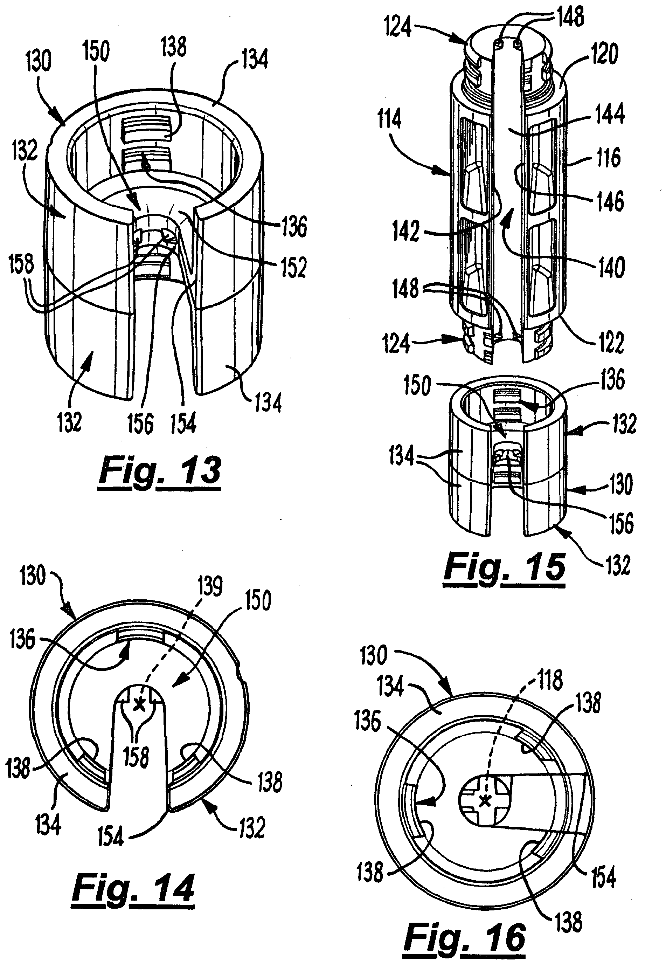

Figures 9 to 16 show another stiffening assembly, generally designated 110, for stiffening the rod 12. The stiffening assembly 110 comprises a plurality of main modules 114, each having a substantially cylindrical body 116. The substantially cylindrical body 116 has a central main axis 118 (see Figures 12 and 16) which extends longitudinally through the body 116.

The cylindrical body 116 also has opposite ends 120, 122. Each main module 114 also includes a respective first fastening formation 124 extending axially from each of the opposite ends 120, 122. The first fastening formation 124 comprises a projecting formation in the form of a male fastening formation.

Each first fastening formation 124 comprises a substantially cylindrical portion 126 extending axially from the body 116. Each first fastening formation 124 further includes an outwardly projecting first securing arrangement 128 comprising first parts of a bayonet fitting. The first securing arrangements 128 are in the form of channels 129, which extend circumferentially around the cylindrical portions 126. The first securing arrangements 128 include stop members 131 at one end of each channel 129, the purpose of which is described below. The stop members 131 are in the form of walls extending across the channels 129.

The stiffening assembly 110 further includes a plurality of coupling modules 130 to couple the main modules 114 to one another when the main modules 114 and the coupling modules 130 are mounted on the rod 12. Gaps 129A are defined between the channels 129 to receive second parts 138 (see below) of the bayonet fitting when the main module 114 is secured to the coupling module 130. The second parts 138 are in the form radially inwardly extending projections.

Each coupling module 130 comprises a pair of opposed second fastening formations 132. Each of the second fastening formations 132 is in the form of a female fastening formation.

Each of the second fastening formations 132 comprises a socket formation in the form of a hollow cylindrical portion 134 and a radially inwardly extending second securing arrangement 136 in the form of the second parts 138 of the bayonet fitting. The second fastening formations 132 are axially aligned with each other. Each coupling module 130 has a central main axis 139 (see Figure 14)

Alternatively, the first and second fastening formations 128, 132 may comprise corresponding threads on the cylindrical portions 126, 134.

Each of the main modules 114 has a receiving formation 140 comprising an elongate axially extending member 142 defining an elongate recess 144 extending inwardly from an elongate opening 146 extending the length of the body 116.

The recess 144 extends from the opening 146 to a region beyond the central main axis 118 of the main module 114 and can receive the rod 12 therethrough. The recess 144 and the opening 146 also extend through the first fastening arrangements 124. The rod 12 can be inserted into the recess 144 via the opening 146.

The receiving formation 140 includes a plurality of inner projections in the form of gripping elements 148 projecting inwardly from the axially extending member into the recess 144. The function of the gripping elements 148 is to engage the rod 12 when it is inserted into the recess.

Each of the coupling modules 130 has a holding portion 150 between the opposed second fastening formations 132. The holding portion comprises a separator 152, which separates the second fastening formations 132 from each other.

The hollow cylindrical portions 134 define an opening 154 which extends the whole length of the coupling module 130. The separator 152 defines a recess 156 which extends across the separator 152 from the opening 154 to a region beyond the central main axis 139 of the coupling module 130. Thus, the recess 156 can receive the rod 12 therein. The rod 12 can be inserted into the recess 156 via the opening 146.

The holding portion 150 includes a plurality of inner projecting members in the form of gripping elements 158 projecting inwardly from the separator 152 into the recess 156. The function of the gripping elements 158 is the same as the function of the gripping elements 148, i.e. to engage the rod 12 when it is inserted into the recess 156.

The gripping elements 148, 158 provide the advantage that they allow rods 12 of different diameters to be held in the receiving formation 140. In the case of larger diameter rods 12, the gripping elements 148, 158 are crushed by the rod 12 when it is received in the recess 144 and the modules 114, 130 rotated relative to each other to secure them together (see below). In the case of smaller diameter rods 12, the gripping elements 148, 158 simply engage the rod 12.

As shown in Figures 9 to 11, the stiffening assembly 110 is arranged on the rod 12, so that the rod 12 is received in the recesses 144, 156 and is engaged by the gripping elements 148, 158. The main modules 114 and the coupling modules 130 are arranged so that their central main axes 118, 139 are aligned with each other. When so received, the rod 12 extends along the central main axes 118, 139.

When the stiffening assembly 110 is assembled, the main modules 114 alternate with respect to the coupling modules 130. The first fastening arrangements 128 of the main modules 114 are received within the second fastening arrangements 132 of the coupling modules 130, as shown in Figure 10. When the first fastening arrangements 128 are received within the second fastening arrangements 132, the inwardly extending second parts 138 of the bayonet fitting are received in the gaps 129A between the channels 129.

The main modules 114 and the coupling modules 130 can then be rotated or twisted, for example by 90°, relative to each other about the central main axis 118, as shown by the arrows A and B in Figure 10, to the positions shown in Figure 11. The first and second fastening arrangements 128, 132 cooperate with each other, so that the inwardly extending second parts 138 move along the channels 129 until the inwardly extending second parts engage the stop members 131. In this position, the main modules 114 are secured to the coupling modules 130. Thus, the main modules 114 are coupled to one another by means of the coupling modules 130.

The lengths of the main modules 114 and of the coupling modules 130 are selected to provide the maximum coverage of any length of the rod 12 leaving a minimum length of the rod protruding from the ends of the stiffening assembly 110. In order to ensure maximum coverage of the rod 12, the user can choose the number of main modules 114 and coupling modules 130, and whether or not coupling modules 130 are provided at the top or bottom of the stiffening assembly 110.

The provision of the main modules 114 and the coupling modules 130 of different lengths allows as much as possible of the length of the rod 12 to be covered by the stiffening assembly 110.

The stiffening assembly 110 includes opposite male fastening formations 124 on the main modules 114, and opposite female fastening formations 132 on the coupling module 130, to facilitate coupling the modules 114, 130 to one another. The main modules 114 and the coupling modules 130 can be fastened to each other by means of a bayonet fitting which effects the aforesaid fastening by a relative rotation of the modules 114, 130 by 90° to allow easier coupling.

The recesses 144, 156 have a width to receive rods 12 of differing diameters, for example from 3/8" (9.5 mm) to 1/2" (12.7 mm). The provision of the gripping elements 148, 158 allows the stiffening assembly 110 to be secured to the rods 12 of different diameters, as explained above.

In the stiffening assembly 110 shown in Figures 9 to 11, the stop members 131 and the inwardly extending second parts 138 are positioned so that when the second portions 138 engage the stop members 131, the elongate recesses 144 of adjacent main modules 114 are 180° out of alignment with each other. This means that alternate main modules 114 are in alignment with each other.

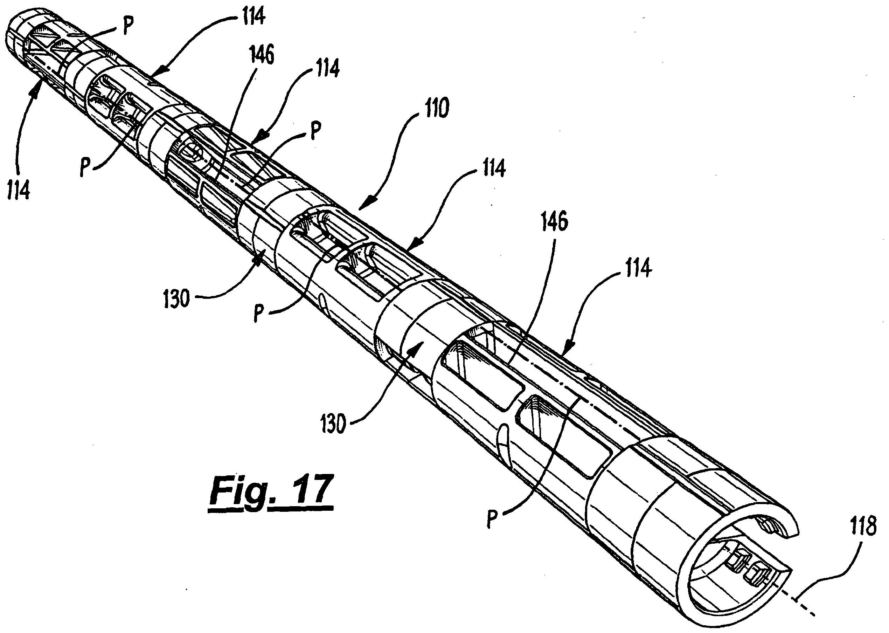

In a further modification, shown in Figure 17, the stop members 131 and the inwardly extending second parts 138 are positioned so that when the main modules 114 and the coupling modules 130 are secured to one another, the adjacent main modules 114 and coupling modules 130 are rotated relative to each other about the main axis 118 by between 95° and 100°, for example substantially 98.5°. This provides the effect that adjacent main modules 114 are out of alignment by between 190° and 200° relative to each other, for example 197°. Alternate main modules are between 4° and 40° out of alignment, for example, substantially 34°.

In the stiffening assembly 110 shown in Figures 9 to 16 described herein, the stop members 131 and the inwardly extending second parts 138 can be positioned so that the adjacent main modules 114 and coupling modules 130 are rotated relative to each other about the main axis 118 by substantially 98.5°. Adjacent main modules 114A are therefore disposed at substantially 197° out of alignment with each other, and alternate main modules 114A and 114B are disposed substantially 34° out of alignment.

This is shown in Figure 17 by the use of broken lines, which represent the identical planes P extending through each of the main modules 114. As can be seen from Figure 17, the planes P are out of alignment with each other. The planes P of adjacent main modules 114 extend longitudinally of each main module 114 through the main axis 118 and the respective elongate opening 146. When the main modules 114 are coupled to one another by the coupling members 130, the planes P of adjacent main modules 114 are disposed at an angle of substantially 17° relative to each other, and the planes P of alternate main modules 114 are disposed at an angle of 34° relative to each other. Thus, the planes P are successively twisted in the same direction relative to each other.

The arrangement described in the immediately preceding paragraph provides the advantage that biplanar stiffness is avoided. Biplanar stiffness can be explained as follows with reference to the stiffening assembly 110 shown in Figures 9 to 16. In the stiffening assembly 110 shown in Figures 9 to 16, the main modules 114 are aligned with each other, so that all of the planes P are aligned with each other.

Where the modules 114 are aligned, the stiffening assembly 10 formed therefrom develops two mutually perpendicular planes, namely a stronger plane that can resist lateral bending forces perpendicular thereto along the length of the stiffening assembly 10, and a weaker plane that is less able to resist the lateral bending forces perpendicular thereto. As a result, the stiffening assembly 10 so formed has a tendency to bend in the weak plane.

In contrast, the arrangement of the stop members 131 and the inwardly extending second parts 138 as described above with reference to Figure 17, so that the planes P of adjacent main modules 114 are successively out of alignment with each by substantially 17°, no biplanar stiffness develops. With such an arrangement, the main modules 114 and the coupling modules 130 are disposed successively out of alignment with each other, so that mutually perpendicular stronger and weaker planes do not develop; in effect, the stronger and weaker planes are twisted about the main axis of the stiffening assembly so that the stiffening assembly can resist lateral bending forces substantially equally around its circumference.

## Claims

1. A stiffening assembly (10) for stiffening an article, the stiffening assembly (10) comprising a plurality of main modules (14) arrangeable on the article, each main module (14) comprising:
a body (16) defining a longitudinal central axis (32), a receiving formation (28) within the body (16), and a longitudinally extending elongate outer opening (36) to allow access of the article to the receiving formation (28), wherein the body (16) has opposite ends (20, 22) and the central axis (32) extends between said opposite ends (20, 22);
wherein the receiving formation (28) defines an internal space (30) for receiving the portion of the article therethrough, and wherein the receiving formation (28) has a longitudinal subsidiary central axis (32), **characterised in that** the longitudinal subsidiary central axis (32) of the receiving formation (28) is offset from the main central axis (32) of the body (16).

2. A stiffening assembly (10) according to claim 1, wherein the receiving formation (28) and the internal space (30) are elongate.

3. A stiffening assembly (10) according to claim 1 or 2, wherein the receiving formation (28) has opposite open ends to allow the article to extend through the internal space (30).

4. A stiffening assembly (10) according to claim 1, 2 or 3, wherein the internal space (30) extends substantially along the central axis (32) of the body (16).

5. A stiffening assembly (10) according to any preceding claim, further including a securing arrangement for securing the main modules (14) to the article.

6. A stiffening assembly (10) according to any preceding claim, comprising a fastening arrangement for fastening the main modules (14) to one another, the fastening arrangement comprising first and second fastening formations (24, 26).

7. A stiffening assembly according to claim 6, wherein the first fastening formations (24) comprise male fastening formations.

8. A stiffening assembly according to claim 7, wherein the second fastening formations (26) comprise female fastening formations to receive the male fastening formations.

9. A stiffening assembly (10) according to any preceding claim, wherein the receiving formation (28) defines an inner opening (34) to allow said portion of the article to be received within the internal space (30).

10. A stiffening assembly (10) according to claim 9, wherein the inner opening (34) is elongate and extends the whole length of the receiving formation (28).

11. A stiffening assembly (10) according to claim 9 or 10, wherein the body (16) defines a guide passage (42) to guide the article to the inner opening (34) defined by the receiving formation (28).

12. A stiffening assembly (10) according to any preceding claim, wherein the guide passage (42) is configured to guide the article between the outer opening (36) and the inner opening (34).

13. A stiffening assembly (10) according to claim 12, wherein the body (16) comprises opposed walls (40) extending between the inner opening (34) and the outer opening (36).

14. A stiffening assembly (10) according to claim 12 or 13, wherein the opposed walls (40) define the guide passage (42).

## Patentansprüche

1. Versteifungsanordnung (10) zum Versteifen eines Gegenstands, wobei die Versteifungsanordnung (10) eine Vielzahl von Hauptmodulen (14), die an dem Gegenstand angeordnet werden können, umfasst, wobei jedes Hauptmodul (14) Folgendes umfasst:
einen Körper (16), der eine Längsmittelachse (32), eine Aufnahmestruktur (28) innerhalb des Körpers (16) und eine sich länglich erstreckende, verlängerte Außenöffnung (36) definiert, damit der Gegenstand auf die Aufnahmestruktur (28) zugreifen kann, wobei der Körper (16) gegenüberliegende Enden (20, 22) aufweist und sich die Mittelachse (32) zwischen den gegenüberliegende Enden (20, 22) erstreckt;
wobei die Aufnahmestruktur (28) einen Innenraum (30) zum Aufnehmen des Abschnitts des Gegenstands durch diesen hindurch definiert und wobei die Aufnahmestruktur (28) eine länglich untergeordnete Mittelachse (32) aufweist, **dadurch gekennzeichnet, dass** die länglich untergeordnete Mittelachse (32) der Aufnahmestruktur (28) von der Hauptmittelachse (32) des Körpers (16) versetzt ist.

2. Versteifungsanordnung (10) nach Anspruch 1, wobei die Aufnahmestruktur (28) und der Innenraum (30) verlängert sind.

3. Versteifungsanordnung (10) nach Anspruch 1 oder 2, wobei die Aufnahmestruktur (28) gegenüberliegende offene Enden aufweist, damit sich der Gegenstand durch den Innenraum (30) erstrecken kann.

4. Versteifungsanordnung (10) nach Anspruch 1, 2 oder 3, wobei sich der Innenraum (30) im Wesentlichen entlang der Mittelachse (32) des Körpers (16) erstreckt.

5. Versteifungsanordnung (10) nach einem der vorhergehenden Ansprüche, die ferner eine Sicherungsanordnung zum Sichern der Hauptmodule (14) an dem Gegenstand beinhaltet.

6. Versteifungsanordnung (10) nach einem der vorhergehenden Ansprüche, umfassend eine Befestigungsanordnung zum Aneinanderbefestigen der Hauptmodule (14), wobei die Befestigungsanordnung erste und zweite Befestigungsstrukturen (24, 26) umfasst.

7. Versteifungsanordnung nach Anspruch 6, wobei die ersten Befestigungsstrukturen (24) nach außen abstehende Befestigungsstrukturen umfassen.

8. Versteifungsanordnung nach Anspruch 7, wobei die zweiten Befestigungsstrukturen (26) nach innen gehende Befestigungsstrukturen umfassen, um die nach außen abstehenden Befestigungsstrukturen aufzunehmen.

9. Versteifungsanordnung (10) nach einem der vorhergehenden Ansprüche, wobei die Aufnahmestruktur (28) eine Innenöffnung (34) definiert, damit der Abschnitt des Gegenstands in den Innenraum (30) aufgenommen werden kann.

10. Versteifungsanordnung (10) nach Anspruch 9, wobei die Innenöffnung (34) verlängert ist und sich über die gesamte Länge der Aufnahmestruktur (28) erstreckt.

11. Versteifungsanordnung (10) nach Anspruch 9 oder 10, wobei der Körper (16) einen Führungskanal (42) definiert, um den Gegenstand zur Innenöffnung (34) zu führen, die durch die Aufnahmestruktur (28) definiert ist.

12. Versteifungsanordnung (10) nach einem der vorhergehenden Ansprüche, wobei der Führungskanal (42) dazu konfiguriert ist, den Gegenstand zwischen der Außenöffnung (36) und der Innenöffnung (34) zu führen.

13. Versteifungsanordnung (10) nach Anspruch 12, wobei der Körper (16) gegenüberliegende Wände (40) umfasst, die sich zwischen der Innenöffnung (34) und der Außenöffnung (36) erstrecken.

14. Versteifungsanordnung (10) nach Anspruch 12 oder 13, wobei die gegenüberliegenden Wände (40) den Führungskanal (42) definieren.

## Revendications

1. Ensemble de renforcement (10) destiné à rigidifier un article, l'ensemble de renforcement (10) comprenant une pluralité de modules principaux (14) pouvant être agencés sur l'article, chaque module principal (14) comprenant :
un corps (16) définissant un axe central longitudinal (32), une formation de réception (28) dans le corps (16) et une ouverture externe allongée s'étendant longitudinalement (36) pour permettre l'accès de l'article à la formation de réception (28), ledit corps (16) possédant des extrémités opposées (20, 22) et ledit axe central (32) s'étendant entre lesdites extrémités opposées (20, 22) ;
ladite formation de réception (28) définissant un espace interne (30) destiné à recevoir la partie de l'article à travers celle-ci, et ladite formation de réception (28) présentant un axe central auxiliaire longitudinal (32), **caractérisé en ce que** l'axe central auxiliaire longitudinal (32) de la formation de réception (28) est décalé par rapport à l'axe central principal (32) du corps (16).

2. Ensemble de renforcement (10) selon la revendication 1, ladite formation de réception (28) et ledit espace interne (30) étant allongés.

3. Ensemble de renforcement (10) selon la revendication 1 ou 2, ladite formation de réception (28) possédant des extrémités ouvertes opposées pour permettre à l'article de s'étendre à travers l'espace interne (30).

4. Ensemble de renforcement (10) selon la revendication 1, 2 ou 3, ledit espace interne (30) s'étendant sensiblement le long de l'axe central (32) du corps (16).

5. Ensemble de renforcement (10) selon l'une quelconque des revendications précédentes, comprenant en outre un agencement d'attache destiné à attacher des modules principaux (14) à l'article.

6. Ensemble de renforcement (10) selon l'une quelconque des revendications précédentes, comprenant un agencement de fixation destiné à la fixation des modules principaux (14) l'un à l'autre, ledit agencement de fixation comprenant des première et seconde formations de fixation (24, 26).

7. Ensemble de renforcement selon la revendication 6, lesdites premières formations de fixation (24) comprenant des formations de fixation mâles.

8. Ensemble de renforcement selon la revendication 7, lesdites secondes formations de fixation (26) comprenant des formations de fixation femelles destinées à recevoir les formations de fixation mâles.

9. Ensemble de renforcement (10) selon l'une quelconque des revendications précédentes, ladite formation de réception (28) définissant une ouverture interne (34) pour permettre à ladite partie de l'article d'être reçue dans l'espace interne (30).

10. Ensemble de renforcement (10) selon la revendication 9, ladite ouverture interne (34) étant allongée et s'étendant sur toute la longueur de la formation de réception (28).

11. Ensemble de renforcement (10) selon la revendication 9 ou 10, ledit corps (16) définissant un passage de guidage (42) pour guider l'article vers l'ouverture interne (34) définie par la formation de réception (28).

12. Ensemble de renforcement (10) selon l'une quelconque des revendications précédentes, ledit passage de guidage (42) étant conçue pour guider l'article entre l'ouverture externe (36) et l'ouverture interne (34).

13. Ensemble de renforcement (10) selon la revendication 12, ledit corps (16) comprenant des parois opposées (40) s'étendant entre l'ouverture interne (34) et l'ouverture externe (36).

14. Ensemble de renforcement (10) selon la revendication 12 ou 13, lesdites parois opposées (40) définissant le passage de guidage (42).
